# EUROPÄISCHE PATENTSCHRIFT

(11) **EP 1 587 361 B1**
(45) Veröffentlichungstag und Bekanntmachung des Hinweises auf die Patenterteilung: **21.09.2011**
(21) Anmeldenummer: 04702278.5
(22) Anmeldetag: 15.01.2004
(51) Int. Cl.: A01K 5/02

(54) **VORRICHTUNG ZUR FÖRDERUNG VON SCHÜTTGUT UND DAMIT AUSGERÜSTETE DOSIER- UND/ODER MISCHEINRICHTUNG**
DEVICE FOR TRANSPORTING BULK MATERIAL AND DOSING AND/OR MIXING SYSTEM PROVIDED WITH ONE SUCH DEVICE
DISPOSITIF POUR TRANSPORTER DE LA MATIERE EN VRAC ET SYSTEME DE DOSAGE ET/OU DE MELANGE EQUIPE DE CE DISPOSITIF

(30) Priorität: 16.01.2003 DE 10301359
(43) Veröffentlichungstag der Anmeldung: 26.10.2005
(73) Patentinhaber: Lührs, Friedrich, 49453 Rehden /Lohaus (DE)
(72) Erfinder: Lührs, Friedrich, 49453 Rehden /Lohaus (DE)
(74) Vertreter: Dantz, Jan Henning
(86) Internationale Anmeldenummer: PCT/DE2004/000073
(87) Internationale Veröffentlichungsnummer: WO 2004/065265

(56) Entgegenhaltungen:
- EP-A- 0 292 723
- EP-A- 0 431 525
- EP-A- 0 590 187
- AT-B- 384 147
- DE-A- 3 738 156
- GB-A- 2 345 344
- US-A- 5 686 671
- US-A- 5 782 201

## Beschreibung

Die Erfindung betrifft eine Vorrichtung nach dem Oberbegriff des Anspruchs 1 zur Förderung von Schüttgut und damit ausgerüstete Dosier- und/oder Mischeinrichtungen.

Es ist häufig erwünscht, mit Fördervorrichtungen transportierten Medien wie z. B. Futtermitteln in vorbestimmte Mengen ausgewählte Zusatzstoffe zuzuführen. Die Zugabe solcher Zusatzstoffe zu flüssigen Futtermitteln ist allgemein bekannt (AT-B-384 147). Die Dosierung der Zusatzstoffe erfolgt unter der Steuerung eines Durchflussmengen-Messgeräts, das in-einer das flüssige Futtermittel transportierenden Rohrleitung angeordnet ist.

Das Eindosieren von Zusatzstoffen in Schüttgüter, die mit Fördervorrichtungen transportiert werden, kann bisher nur dann mit ausreichender Genauigkeit erfolgen, wenn das Schüttgut mit einer bekannten, gleich bleibenden Fördermenge (Gewicht pro Zeiteinheit) gefördert wird. An dieser Voraussetzung fehlt es häufig. Es sind Vorrichtungen der eingangs bezeichneten Gattung zur Förderung des Schüttguts bekannt (DE-A-37 38 156), mittels derer einer Vielzahl von Ausgabestationen jeweils vorbestimmte Gewichtsmengen an Trockenfutter zugeführt werden können. Jeder Ausgabestation sind hier ein Vorratsbehälter für das Trockenfutter und eine mit einem Ausgang des Vorratsbehälters verbundene und zur betreffenden Ausgabestation führende Förderschnecke zugeordnet. Um festzustellen, wieviel Trockenfutter durch die Förderschnecken zugeführt wird, sind nicht nur alle Förderschnecken identisch ausgebildet, sondern es ist auch wenigstens eine, ebenfalls identisch ausgebildete Förderschnecke vorgesehen, deren Förderleistung gemessen wird. Zur Durchführung der Messung ist der Vorratsbehälter dieser Förderschnecke als Wiegebehälter eines Massenmengendurchfluss-Messgeräts ausgebildet. Im Anschluss an die Füllung des Wiegebehälters mit einer vorbestimmten Menge an Trockenfutter wird der Wiegebehälter durch Betätigung der Förderschnecke entleert, wobei mittels einer Wiegeeinrichtung gemessen wird, wieviele Gewichtseinheiten an Trockenfutter dem Wiegebehälter pro Umdrehung der Förderschnecke entnommen und in eine Aufnahmeeinrichtung überführt werden. Durch eine solche Messung wird daher bekannt, wieviele Umdrehungen die verschiedenen Förderschnecken ausführen müssen, um den ihnen zugeordneten Ausgabestationen vorgewählte Mengen an Trockenfutter zuzuführen. Allerdings arbeitet eine solche Vorrichtung intermittierend, und Mittel zur Zufuhrung von Zusatzstoffen sind bei dieser Vorrichtung nicht vorgesehen.

In Viehställen wird dagegen in der Regel Trockenfutter in Form von Mehl, Pellets od. dgl. nicht nur mit Hilfe einer kontinuierlich arbeitenden Fördervorrichtung einer Vielzahl von Verbrauchsstellen zugeführt, sondern auch an wenigstens einer Dosiereinrichtung mit Zusatzstoffen wie z. B. Vitaminen, Mineralstoffen od. dgl. angereichert. Dabei wird die Dosiereinrichtung aber lediglich in Abhängigkeit davon ein oder ausgeschaltet, ob die Fördervorrichtung Futter fördert oder nicht. Schwankungen in der Förderleistung, wie sie z. B. aufgrund einer ungleichförmigen Überführung des Schüttguts aus einem Vorratsbehälter in die Fördereinrichtung auftreten können, werden bei diesen Dosiereinrichtungen nicht berücksichtigt und beeinflussen somit die Dosiergenauigkeit. Eine Vermeidung dieses Nachteils ist bei Anwendung herkömmlicher Fördervorrichtungen, die meistens aus Stetigförderern, insbesondere Kettenförderern bestehen, nicht möglich.

Ein weiteres Dosierproblem ergibt sich häufig dann, wenn der Wunsch besteht, mit mehreren Fördervorrichtungen zugeführte Schüttgütern, z. B. unterschiedliche Arten von Trockenfutter, in einem genauen Mengenverhältnis zu mischen. Auch hierbei wird bisher vorausgesetzt, daß die mit den Fördervorrichtungen zugeführten Schüttgutmengen keinen zeitlichen Schwankungen unterliegen.

Der Erfindung liegt daher die Aufgabe zugrunde, eine Fördervorrichtung für Schüttgüter der hier interessierenden Art so auszubilden, daß je nach Bedarf eine genaue Dosierung und/oder Vermischung von Schüttgut unabhängig davon möglich ist, ob die Förderleistung der beteiligten Fördervorrichtungen konstant ist oder Schwankungen unterliegt.

Zur Lösung dieser Aufgabe dient zunächst die Fördervorrichtung nach dem Patentanspruch 1. Eine derart ausgebildete Fördervorrichtung schafft die Voraussetzungen dafür, eine genaue Dosierung und/oder Mischung von Schüttgütern zu erreichen. Mit einer derartigen Fördervorrichtung wird erfindungsgemäß weiter eine Dosier- und/- oder Mischeinrichtung ausgerüstet, wie sich aus den Merkmalen der Ansprüche 15 und 16 ergibt. Dadurch wird einerseits eine Dosierung möglich, bei welcher die Mengen der zuzufügenden Zusatzstoffe an die mit der Fördervorrichtung zugeführt Menge an Schüttgut angepaßt werden können, so daß auch bei Schwankungen der Förderleistung bzw. der der Dosiereinrichtung zugeführten Schüttgut- bzw. Trockenfuttermengen eine hohe Dosiergenauigkeit bzw. ein genaues Mengen- und/oder Gewichtsverhältnis des Schüttguts zu den Zusatzstoffen eingehalten werden kann, Andererseits können mit zwei oder mehr erfindungsgemäßen Fördervorrichtungen Schüttgutmischungen mit Mischungsverhältnissen hergestellt werden, die von Schwankungen der jeweiligen Förderleistungen weitgehend unabhängig sind.

Weitere vorteilhafte Merkmale ergeben sich aus den abhängigen Ansprüchen.

Die Erfindung wird nachfolgend in Verbindung mit den beiliegenden Zeichnungen an Ausführungsbeispielen näher erläutert. Es zeigen:
Fig. 1 einen schematischen Längsschnitt durch eine erfmdungsgemäße Schüttgut-Fördervorrichtung mit angeschlossener Dosiereinrichtung;
Fig. 2 und 3 schematische Schnitte längs der Linien II - II und III - III der Fig. 1; und
Fig. 4 einen schematischen Schnitt durch eine Mischeinrichtung, die zwei erfmdungsgemäße Fördervorrichtungen enthält.

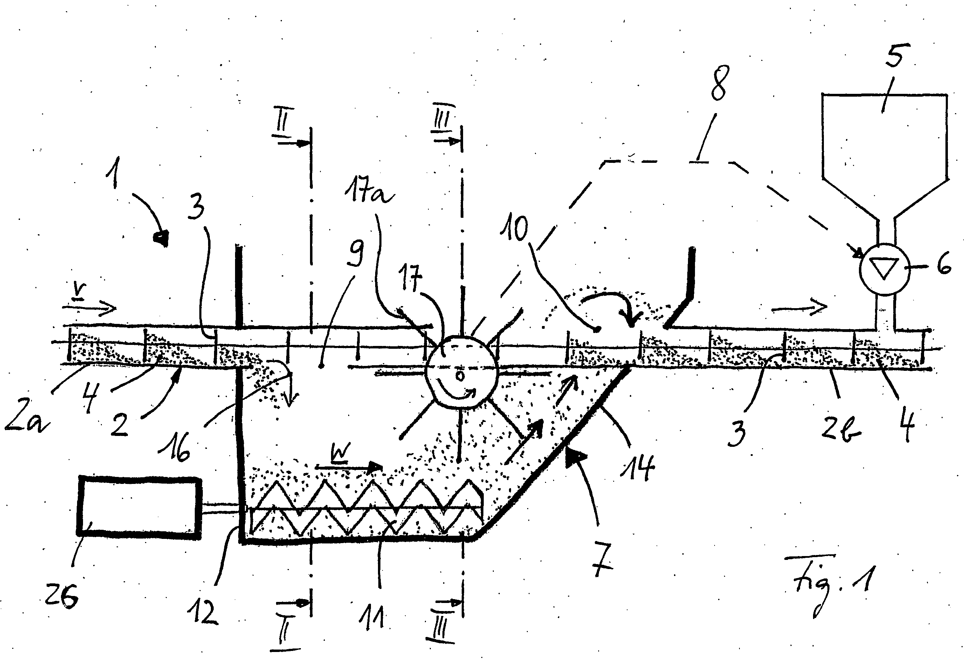

Fig. 1 bis 3 zeigen grob schematisch eine Fördervorrichtung 1. Diese besteht im Ausführungsbeispiel aus einem kontinuierlich arbeitenden Förderer in Form eines Kettenförderers, der als Transportmittel wenigstens eine nicht dargestellte, in Richtung von Pfeilen v bewegte Kette enthält, die in einem rundum geschlossenen, eine Förderbahn 2 vorgebenden Rohr geführt ist. An der Kette sind in vorgewählten Abständen übliche Mitnehmer 3 befestigt, zwischen denen ein zu förderndes, schematisch angedeutetes Schüttgut 4 angeordnet ist, das von der Kette und den Mitnehmern 3 in Richtung der Pfeile v mitgeschleppt wird. Im Ausführungsbeispiel handelt es sich bei der Fördervorrichtung 1 um einen üblichen Kettenförderer, wie er insbesondere in Rinder- oder Schweineställen häufig anzutreffen ist, während das Schüttgut 4 als Trockenfutter in Form von Getreidekörnern, Sojaschrot, feinem Futtermehl od. dgl. mit Korngrößen bis z.B. 10 mm vorliegt. Die Förderbahn 2 erstreckt sich normalerweise bis zu wenigstens einer Verbrauchsstelle od. dgl. und kann dabei insbesondere an einer Dosiereinrichtung 5 vorbeiführen, mittels derer dem vorbeiströmenden Schüttgutstrom ein nicht dargestellter Zusatzstoff zugegeben werden kann. Die Dosierung erfolgt dabei mit einer üblichen Austragseinheit 6, die über ein Rohrstück an eine obere Öffnung des die Förderbahn 2 bildenden Rohrs angeschlossen ist.

ErfmdungsgemäB kann die mit der Dosiereinrichtung 5 zugeführte Menge an Zusatzstoffen so an die momentane Fördermenge der Fördervorrichtung 1 angepaßt werden, das auch bei Schwankungen von deren Förderleistung die gewünschte Dosiergenauigkeit eingehalten wird.

Zu diesem Zweck ist die Förderbahn 2 erfindungsgemäß an einer vorgewählten Stelle unterteilt und mit je einer. Abgabe- und Aufnahmeeinheit für das Schüttgut 3 versehen. Zwischen der Abgabeeinrichtung und der Aufnahmeeinrichtung ist eine Meßeinrichtung 7 angeordnet, mittels derer die transportierte Menge an Schüttgut 4 gemessen werden kann. Hierdurch ist es möglich, die Austragseinheit 6, wie in Fig. 1 durch eine Leitung 8 angedeutet ist, in Abhängigkeit von der ermittelten Fördermenge zu steuern.

Die Meßeinrichtung 7 ist so eingerichtet, daß sie zumindest einen Teilstrom des durch die Förderbahn 2 transportierten Schüttguts 3 aus dieser entfernt, eine Größe ermittelt, die der in diesem Teilstrom transportierten Schüttgutmenge entspricht, und den Teilstrom daran anschließend wieder in die Förderbahn 2 einführt.

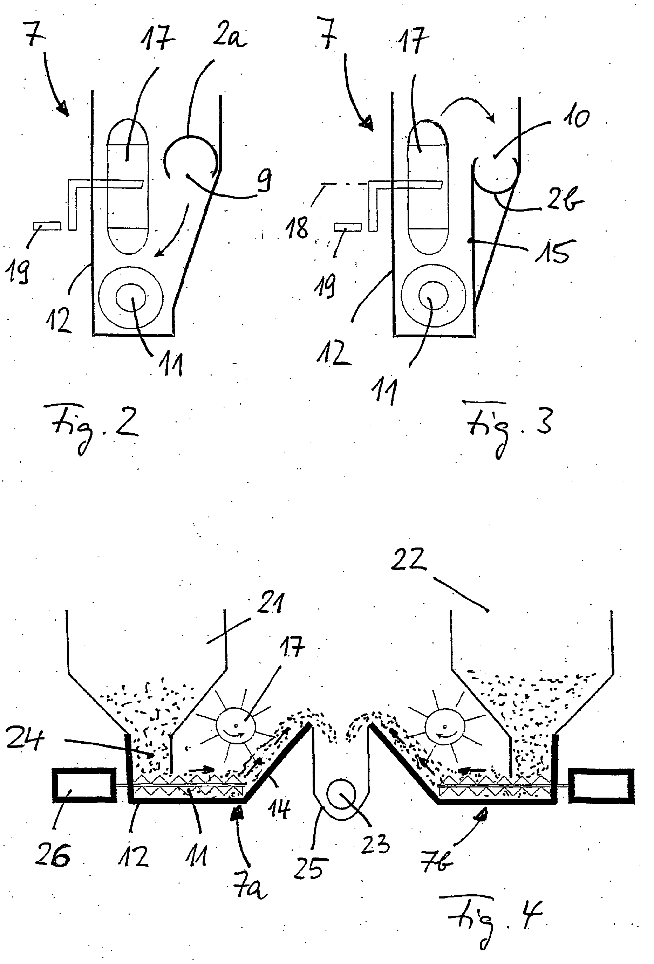

Im Ausführungsbeispiel wird die Abgabeeinrichtung durch eine untere Öffnung 9 in dem die Förderbahn 2 festlegenden Rohr gebildet, wie insbesondere Fig. 2 zeigt.
Diese Öffnung 9 bildet zusammen mit einem in Förderrichtung (Pfeil v) davor liegenden Abschnitt 2a der Förderbahn 2 eine Abgabeeinrichtung, mittels derer zugeführtes Schüttgut 4 zumindest teilweise in die Meßeinrichtung 7 überführt wird. Die Rückrührung dieses Schüttgutstroms aus der Meßeinrichtung 7 in die Förderbahn 2 erfolgt an einer weiteren, in Förderrichtung weiter stromab gelegenen Stelle mittels einer weiteren, jedoch oben gelegenen Öffnung 10 in dem die Förderbahn 2 bildenden Rohr, wie insbesondere Fig. 3 zeigt. Diese zweite Öffnung 10 bildet zusammen mit einem in Förderrrichtung dahinter liegenden Abschnitt 2b der Förderbahn 2 eine Aufnahmeeinrichtung für die bei der Öffnung 9 abgezweigte und in die Meßeinrichtung überführte Schüttgutmenge.

Die Meßeinrichtung 7 weist einen zwischen den beiden Öfnnungen 9 und 10 angeordneten Zwischenförderer 11 auf, der vorzugsweise als Förderschnecke ausgebildet ist. Mit besonderem Vorteil ist die Meßeinrichtung 7 in einem Behälter bzw. Trog 12 untergebracht, der unterhalb eines ausgewählten Abschnitts der Förderbahn 2 angeordnet und bis auf eine nach oben offene Oberseite durch Seitenwände und einen Boden rundum geschlossen ist.

Die Öffnung 9 ist vorzugsweise ausreichend weit oberhalb des Bodens des Behälters 12 und des am Boden vorgesehenen Zwischenförderers 11 angeordnet. Dadurch wird das Schüttgut 4 von der Abgabeeinrichtung durch Schwerkraft bzw. durch Ausbildung eines Gefälles aus der Förderbahn 2 entfernt, so daß es von dem in Förderrichtung hinteren Ende des Zwischenförderers 11 erfaßt und von diesem in Richtung eines zum Pfeil v parallelen Pfeils w durch den Behälter 12 tranportiert werden kann.

Die Meßeinrichtung 7 weist in Förderrichtung (Pfeil w) hinter dem Zwischenförderer 11 ferner eine Steigungsstrecke 14 auf, die z.B. durch einen ansteigenden Bodenabschnitt des Behälters 12 ausgebildet ist und von dem in Förderrichtung vorderen Ende des Zwischenförderers 11 zur Öffnung 10 führt. Diese ist, wie insbesondere Fig. 3 zeigt, von einem mit dem Zwischenförderer 11 und der Steigungsstrecke 14 versehenen Teil des Behälters 12 durch eine Zwischenwand 15 getrennt. Daher ist die * Anordnung so getroffen, daß derjenige Teil des Schüttguts 4, der in Richtung eines Pfeils 16 aus der Förderbahn 2 abgezweigt wird, durch Schwerkraft zum Zwischenförderer 11 gelangt und von diesem weiter transportiert und längs der Steigungsstrecke 14 hochgeschoben wird, bis er nach Art eines Überlaufs über die Oberkante der Zwischenwand 15 und durch die Öffnung 10 hindurch wieder in die Förderbahn 2 gelangt, um in dieser von den Mitnehmern 3 erfaßt und weiter transportiert zu werden.

Vorzugsweise an einer Stelle, die zwischen dem in Förderrichtung vom liegenden Ende des Zwischenförderers 11 und der Öffnung 10 liegt, weist die Meßeinrichtung 7 ein mit dem Teilstrom zusammenwirkendes Meßelement 17 auf, das zur Ermittlung der im Teilstrom geförderten Schüttgutmenge dient. Bevorzugt ist das Meßelement 17 als ein mit Schaufeln 17a od. dgl. versehenes oder in anderer Weise geeignet profiliertes Meßrad ausgebildet, das leicht drehbar um eine Drehachse 18 im Behälter 12 gelagert ist, die im wesentlichen horizontal und senkrecht zur Förderrichtung verläuft. Dabei sind das Meßrad 17 und dessen Schaufeln 17a so ausgebildet und angeordnet, daß das Meßrad 17 von dem Teilstrom mit einer Umfangsgeschwindigkeit bzw. Drehzahl angetrieben bzw. in Umdrehungen versetzt wird, die der im Teilstrom befindlichen Menge an Schüttgut bzw. dem im Teilstrom geförderten Schüttgutvolumen pro Zeiteinheit proportional ist.

Die Austragseinheit 6 der Dosiereinrichtung 5 kann als Dosierorgan beispielsweise ein den jeweiligen Zusatzstoff förderndes, drehbares Pumpenrad od. dgl. aufweisen. Wird dieses Pumpenrad mechanisch mit dem Meßrad 17 gekoppelt, kann es durch die Meßeinrichtung 7 direkt und mit einer Drehzahl angetrieben werden, die der momentanen Fördermenge im abgezweigten Teilstrom entspricht. Dadurch ist auch bei Schwankungen dieser Fördermenge eine exakte Zudosierung möglich. Zwischen das Meßrad 17 und die Austragseinheit 6 kann außerdem ein in Stufen oder stufenlos einstellbares Getriebe geschaltet werden, um das Mengenverhältnis zwischen dem Schüttgut und den Zusatzstoffen individuell vorwählen zu können.

Alternativ kann die Austragseinheit 6 aber auch in anderer Weise unter der Steuerung der Meßeinrichtung 7 stehen. Beispielsweise wäre es möglich, das Meßrad 17 am Umfang mit magnetischen Nord- und/oder Südpolen zu versehen, deren Vorbeigänge an einer vorgegebenen Stelle mit einem geeigneten, induktiven Sensor 19 (Fig. 2 und 3) abgetastet und in elektrische Impulse umgewandelt werden, die dann über die Leitung 8 in Fig. 1 einer elektrischen Schaltung zugeführt werden und eine Impulsfolgefrequenz aufweisen, die proportional zu der im abgezweigten Teilstrom strömenden Schüttgutmenge ist. Mit einem daraus abgeleiteten Signal kann wiederum ein Dosierorgan gesteuert werden, das in diesem Fall auch ein mehr oder weniger weit verschließbarer Schieber sein könnte.

Fig. 4 zeigt ein zweites Ausführungsbeispiel der Erfindung. Das zu einer Verbrauchsstelle zu transportierende Material besteht hier aus einer Mischung aus wenigstens zwei Schüttgütern unterschiedlicher Art, die in je einem Silo bzw. Vorratsbehälter 21 bzw. 22 auf Vorrat gehalten sind und in einem vorgewählten Mischungsverhältnis in einen Mischbehälter gegeben oder irgendeiner zu einer Verbrauchsstelle führenden Fördereinheit 23 zugeführt werden. In diesem Fall stellen somit die Vorratsbehälter 21, 22 je eine Schüttgut-Abgabeeinrichtung und die Fördereinheiten 23 je eine Schüttgut-Aufnahmeeinrichtung der gesamten Fördervorrichtung dar.

Gemäß Fig. 4 befindet sich zwischen jedem Vorratsbehälter 21, 22 und der Fördereinheit 23 eine analog zu Fig. 1 bis 3 ausgebildete Meßeinrichtung 7a bzw. 7b. Jede Meßeinrichtung 7a, 7b enthält demnach einen Behälter 12 mit einem an dessen Boden angeordneten Zwischenförderer 11, einer Steigungsstrecke 14 und einem Meßelement 17. Der Eingang der Meßeinrichtung 7 ist hier durch eine untere Öffnung 24 des Vorrtsbehälters 21 bzw. 22 gebildet, während der Ausgang der Meßeinrichtung 7 ein am Ende der Steigungsstrecke 14 angeordneter Überlauf ist, über den das vom Zwischenförderer 11 auf der Steigungsstrecke 14 hoch gedrückte Schüttgut auf die Fördereinheit 23 bzw. eine diese umgebende Rinne 25 od. dgl. fällt.

Ein erster Unterschied zwischen den beschriebenen Ausführungsbeispielen besteht darin, daß beim Ausführungsbeispiel nach Fig. 1 bis 3 die Abgabe- und Aufnahmeeinrichtungen die zuführenden bzw. abführenden Teile eines durch die Meßeinrichtung 7 unterbrochenen Kettenförderes od. dgl. sind, während beim Ausführungsbeispiel nach Fig. 4 das Schüttgut aus einem Vorratsbehälter 21, 22 ausschließlich durch Schwerkraft in die Meßeinrichtung 7 befördert und aus dieser mittels des Zwischenförderers 11 in eine Aufnahmeeinrichtung überführt wird, die auch ein stationärer Behälter sein kann.

Außerdem ergibt sich ein Unterschied in der Funktion, da das Meßelement 17 beim Ausführungsbeispiel nach Fig. 1 bis 3 ein Dosierorgan steuert, um dadurch einem Schüttgutstrom abgemessene Mengen von Zusatzstoffen zuzufügen, während beim Ausführungsbeispiel nach Fig. 4 Mischungsverhältnisse auch einfach dadurch hergestellt werden können, daß vorgewählte Mengen unterschiedlicher Schüttgüter in einen stationären Behälter gegeben werden. Die Mischung erfolgt dabei z.B. dadurch, daß der Aufnahmeeinrichtung 23, 25 vorgewählte, mit den Meßeinrichtungen 7a, 7b abgemessene Schüttgutmengen zugeführt werden und die Meßelemente 17 z.B. dem Zweck dienen, in den Auslauföffnungen 24 der jeweiligen Vorratsbehälter 21, 22 angeordnete Verschlußelemente zu verschließen, sobald eine vorgewählte Menge an Schüttgut in die Aufnahmeeinrichtung 23, 25 überführt worden ist.

Eine Alternative insbesondere zu dem zuletzt beschriebenen Ausführungsbeispiel besteht darin, mit Hilfe des Meßelements 17 nicht ein Verschlußelement des zugehörigen Vorratsbehälters 21, 22 mehr oder weniger zu öffnen oder zu schließen, sondern einen Antriebsmotor 26 für den zugehörigen Zwischenförderer 11 zu steuern. Dabei besteht einmal die Möglichkeit, den Antriebsmotor 26 ein- bzw. auszuschalten, wenn zum Zwecke der Mischung lediglich eine vorgewählte Menge an Schüttgut in die Aufnahmeeinrichtung 23, 25 befördert werden soll. Besteht dagegen die Aufgabe, eine bestimmte Menge an Schüttgut in einer vorgewählten Zeit zu fördern, dann kann das Meßsignal der Meßeinrichtung 7a, 7b auch dazu verwendet werden, den Antriebsmotor 26 über eine elektronische (Mikroprozessor-) Steuerung od. dgl. so zu steuern, daß der Zwischenförderer 11 je nach Bedarf schneller oder langsamer angetrieben und dadurch in einer bestimmten Zeiteinheit mehr oder weniger Schüttgut aus dem betreffenden Vorratsbehälter 21, 22 in die Aufnahmeeinrichtung 23, 25 transportiert wird.

Weiter ist klar, daß die vorliegende Erfindung auch sowohl eine unter der Steuerung der erfindungsgemäßen Meßeinrichtung stehende Dosiereinrichtung (Fig. 1) als auch eine Mischeinrichtung (Fig. 4) beinhaltet, mittels derer aus wenigstens zwei Vorratsbehältern 21, 22 entnommene Schüttgüter in abgemessenen Mengen in einem gemeinsamen Behälter, Förderelement od. dgl. zusammengeführt werden und darin dann in vorgewählten Gewichtsverhältnissen zueinander stehen.

Die Erfindung ist nicht auf die beschriebenen Ausführungsbeispiele beschränkt, die auf vielfache Weise abgewandelt werden können. Beispielsweise wäre es möglich, in Fig. 1 bis 3 zwei voneinander unabhängige, durch die Meßeinrichtung 7 getrennte Fördersysteme vorzusehen, von denen das eine die Schüttgut-Abgabeeinrichtung und das andere die Schüttgut-Aufnahmeeinrichtung bildet. Die aus Fig. 12 ersichtliche Variante hat jedoch den Vorteil, daß die an sich vorhandene, durchgehende Förderbahn 2 lediglich an den erforderlichen Stellen mit den Öffnungen 9 bzw. 10 versehen werden braucht, so daß die Meßeinrichtung 7 auch leicht nachträglich in eine bereits installierte Fördervorrichtung eingebaut werden kann. Weiter ist zwar aus Fig. 2 und 3 ersichtlich, daß der Zwischenförderer 11, der z. B. durch den schematisch dargestellten Antriebsmotor 26 angetrieben wird, im wesentlichen vertikal unterhalb des Meßelements 18 liegt, während die die Öffnungen 9 bzw. 10 aufweisenden Teile der Förderbahn 2 zum Meßelement 17 seitlich versetzt angeordnet sind. Es ist jedoch offensichtlich, daß insoweit auch zahlreiche andere Gestaltungen für die Meßeinrichtung 7 bzw. den Behälter 12 möglich sind. Weiter kann das Meßrad anders als dargestellt ausgebildet und durch andere Meßelemente 17 ersetzt sein. Weiterhin ergibt sich aus der Anordnung nach Fig. 4, daß hier jeweils der gesamte, aus einem der Vorratsbehälter 21, 22 entnommene Schüttgutstrom über die Meßeinrichtung 7 und den Zwischenförderer 11 geleitet wird, wohingegen bei der Anordnung nach Fig. 1 bis 3 auch dafür gesorgt werden könnte, daß nur ein Teil des durch die Förderbahn 2 zuströmenden Schüttgutstroms in die Meßeinrichtung 7 gelangt, während der übrige Teil des Schüttgutstroms weiter längs der Förderbahn 2 transportiert und dann im Bereich der Öffnung 10 wieder mit dem abgezweigten Teilstrom vereinigt wird. Eine solche Aufteilung ergibt sich bei Anwendung von Kettenförderern mehr oder weniger zwangsläufig, da stets ein kleiner Teil des Schüttguts in den Ketten bzw. Mitnehmerelementen 3 hängen bleibt und daher nicht in die Meßeinrichtung 7 gelangt. Dennoch kann auch hierbei davon ausgegangen werden, daß der abgezweigte Teilstrom in einem festen Verhältnis zum gesamten Schüttgutstrom steht und daher die Messung allein des Teilstroms zu einer präzisen Ermittlung der Menge des die Fördervorrichtung durchströmenden Gesamtstroms führt. Im übrigen versteht sich, daß die beschriebenen Merkmale auch in anderen als den dargestellten und beschriebenen Kombinationen angewendet werden können.

## Patentansprüche

1. Vorrichtung zur Förderung von Schüttgut (4), enthaltend: eine Fördervorrichtung (1) mit einer Schüttgut-Abgabeeinrichtung (9, 21, 22) und einer Schüttgut-Aufnahmeeinrichtung (10, 23), und eine zwischen der Abgabeeinrichtung (9, 21, 22) und der Aufnahmeeinrichtung (10, 23) angeordnete, zur Ermittlung der geförderten Schüttgutmenge bestimmte Messeinrichtung (7), die einen Zwischenförderer (11) enthält, der zumindest einen Teil des von der Fördervorrichtung (1) transportierten Schüttguts aufnimmt und der Aufnahmeeinrichtung (10, 23) zuführt, **dadurch gekennzeichnet, dass** der Zwischenförderer (X1) zur Aufnahme des von der Abgabeeinrichtung (9, 21, 22) abgegebenen Schüttguts eingerichtet ist und dass die Messeinrichtung (7) außerdem ein zwischen dem Zwischenförderer (11) und der Aufnahmeeinrichtung (10, 23) angeordnetes Messrad (17) aufweist, das durch vom Zwischenförderer (11) abgegebenes Schüttgut mit einer der geförderten Schüttgutmenge proportionalen Drehzahl in Umdrehungen versetzbar ist.

2. Vorrichtung nach Anspruch 1, **dadurch gekennzeichnet, dass** die Messeinrichtung (7, 7a, 7b) eine zwischen dem Zwischenförderer (11) und der Aufnahmeeinrichtung (10, 23) angeordnete Steigungsstrecke (14) für das Schüttgut aufweist.

3. Vorrichtung nach Anspruch 1 oder 2, **dadurch gekennzeichnet, dass** die Messeinrichtung (7, 7a, 7b) in einem unterhalb der Abgabeeinrichtung (9, 21, 22) vorgesehenen Behälter (12) angeordnet ist.

4. Vorrichtung nach Anspruch 3, **dadurch gekennzeichnet, dass** die Steigungsstrecke (14) durch einen schräg angeordneten Bodenabschnitt des Behälters (12) gebildet ist.

5. Vorrichtung nach einem der Ansprüche 1 bis 4, **dadurch gekennzeichnet, dass** das Messrad (17) zur Erzeugung von elektrischen Impulsen eingerichtet ist.

6. Vorrichtung nach einem der Ansprüche 1 bis 5, **dadurch gekennzeichnet, dass** der Zwischenförderer (11) als Förderschnecke ausgebildet ist.

7. Vorrichtung nach einem der Ansprüche 1 bis 6, **dadurch gekennzeichnet, dass** die Überführung des Schüttguts (4) von der Abgabeeinrichtung (9, 21, 22) in die Messeinrichtung (7, 7a, 7b) durch Schwerkraft erfolgt.

8. Vorrichtung nach einem der Ansprüche 1 bis 7, **dadurch gekennzeichnet, dass** die Fördervorrichtung (1) eine zum Transport des Schüttguts (4) bestimmte Förderbahn (2) enthält, die eine die Abgabeeinrichtung bildende, zur Messeinrichtung (7) führenden Öffnung (9), durch die zumindest ein Teil des von der Fördervorrichtung (1) transportierten Schüttguts (4) in die Messeinrichtung (7) abfill1rbar ist, und an einer stromab davon liegenden Stelle eine weitere, die Aufnahmeeinrichtung bildende Öffnung (10) zur Rückführung des in die Messeinrichtung (7) abgeführten Teils des Schüttguts in die Förderbahn (2) aufweist.

9. Vorrichtung nach Anspruch 8, **dadurch gekennzeichnet, dass** die Fördervorrichtung (1) als kontinuierlich arbeitender Stetigförderer ausgebildet ist.

10. Vorrichtung nach einem der Ansprüche 1 bis 7, **dadurch gekennzeichnet, dass** die Abgabeeinrichtung einen Vorratsbehälter (21, 22) für das Schüttgut aufweist.

11. Vorrichtung nach einem der Ansprüche 1 bis 10, **dadurch gekennzeichnet, dass** sie mit wenigstens einer eine Austragseinheit (6) aufweisenden Dosiereinrichtung (5) verbunde ist und die Austragseinheit (6) unter der Steuerung der Messeinrichtung (7, 7a, 7b) steht.

12. Vorrichtung nach Anspruch 11, **dadurch gekennzeichnet, dass** die Dosiereinrichtung (5) ein vorn Messrad (17) angetriebenes Dosierorgan enthält.

13. Vorrichtung nach Anspruch 11 oder 12, **dadurch gekennzeichnet, dass** die Dasiereinrichtung (5) eine elektrische, zur Steuerung der Austragseinheit (6) bestimmte Steuerschaltung aufweist, die die elektrischen, vom Messrad (17) abgegebenen Impulse verarbeitet.

14. Vorrichtung nach einem der Ansprüche 1 bis 13, **dadurch gekennzeichnet, dass** die Aufnahmeeinrichtung als Fördereinrichtung (2b, 23) ausgebildet ist.

15. Dosiereinrichtung mit einer Austragseinheit (6) zur dosierten Zuführung von Zusatzstoffen zu einem mittels einer Fördervorrichtung (1) erzeugten Schüttgutstrom, wobei die Austragseinheit (6) unter der Steuerung einer die Fördermenge der Fördervorrichtung (1) messenden Messeinrichtung (7, 7a, 7b) steht, **dadurch gekennzeichnet, dass** die Messeinrichtung (7, 7a, 7b) nach wenigstens einem der Ansprüche 1 bis 14 ausgebildet ist und ein vom Messrad (17) angetriebenes Dosierorgan enthält.

16. Mischeinrichtung für Schüttgut (4) mit wenigstens zwei zu einer gemeinsamen Aufnahmeeinrichtung (23, 25) führenden Fördervorrichtungen zur Zuführung von unterschiedlichen Schüttgütern, wobei jede Fördervorrichtung nach wenigstens einem der Ansprüche 1 bis 14 ausgebildet ist.

## Claims

1. An apparatus for conveying bulk goods (4), comprising a conveying apparatus (1) with a delivery device (9, 21, 22) for the bulk goods and a receiving device (10, 23) for the bulk goods, and a measuring device disposed between the delivery device (9, 21, 22) and the receiving device (10, 23) for determining the conveyed quantity of bulk goods, which measuring device contains an intermediate conveyor (11) which receives at least a part of the bulk goods transported by the conveying apparatus (1) and supplies it to the receiving device (10, 23), **characterized in that** the intermediate conveyor (11) is configured for receiving the bulk goods delivered by the delivery apparatus (9, 21, 22) and that the measuring device (7) further comprises a measuring wheel (17) which is disposed between the intermediate conveyor (11) and the receiving device (10, 23) and which can be made to rotate with a speed proportional to the conveyed quantity of bulk goods by bulk goods delivered by the intermediate conveyor (11).

2. An apparatus according to claim 1, **characterized in that** the measuring device (7, 7a, 7b) comprises an ascending section (14) for the bulk goods which is disposed between the intermediate conveyor (11) and the receiving device (10, 23).

3. An apparatus according to claim 1 or 2, **characterized in that** the measuring device (7, 7a, 7b) is arranged in a container (12) provided beneath the delivery device (9, 21, 22).

4. An apparatus according to claim 3, **characterized in that** the ascending section (14) is formed by an obliquely arranged floor section of the container (12).

5. An apparatus according to one of the claims 1 to 4, **characterized in that** the measuring wheel (17) is configured for generating electric pulses.

6. An apparatus according to one of the claims 1 to 5, **characterized in that** the intermediate conveyor (11) is arranged as a worm conveyor.

7. An apparatus according to one of the claims 1 to 6, **characterized in that** the transfer of the bulk goods (4) from the delivery device (9, 21, 22) to the measuring device (7, 7a, 7b)

8. An apparatus according to one of the claims 1 to 7, **characterized in that** the conveying apparatus (1) contains a conveying section (2) which is determined for the transport of the bulk goods (4) and which comprises an opening (9) which forms the delivery device, which leads to the measuring device (7) and by means of which at least a portion of the bulk goods (4) conveyed by the conveying apparatus (1) can be discharged to the measuring device (7), and a further opening (10) at a point disposed downstream thereof which forms the receiving device for returning to the conveying section (2) the portion of the bulk goods discharged to the measuring device (7).

9. An apparatus according to claim 8, **characterized in that** the conveying apparatus (1) is arranged as a continuously working ascending conveyor.

10. An apparatus according to one of the claims 1 to 7, **characterized in that** the delivery device comprises a storage container (21, 22) for the bulk goods.

11. An apparatus according to one of the claims 1 to 10, **characterized in that** it is connected with at least one dosing device (5) having a discharge unit (6), and the discharge unit (6) is under the control of the measuring device (7, 7a, 7b).

12. An apparatus according to claim 11, **characterized in that** the dosing device (5) comprises a dosing member which is driven by the measuring wheel (17).

13. An apparatus according to claim 11 or 12, **characterized in that** the dosing device (5) comprises an electric control circuit which is determined for controlling the discharge unit (6) and which processes the electric pulses supplied by the measuring wheel (17).

14. An apparatus according to one of the claims 1 to 13, **characterized in that** the receiving device is arranged as a conveying device (2b, 23).

15. A dosing device with a discharge unit (6) for the dosed supply of additives to a stream of bulk goods which is produced by means of a conveying apparatus (1), with the discharge unit (6) being under the control of a measuring device (7, 7a, 7b) measuring the conveying quantity of the conveying apparatus (1) **characterized in that** the measuring device (7, 7a, 7b) is arranged according to one of the claims 1 to 14 and contains a dosing member driven by the measuring wheel (17).

16. A mixing device for bulk goods (4), comprising at least two conveying apparatuses leading to a common receiving device (23, 25) for supplying different bulk goods, wherein each conveying apparatus is arranged according to at least one of the claims 1 to 14.

## Revendications

1. Dispositif pour le transport de matière en vrac (4), comprenant un dispositif de transport (1), avec une installation de dépose de matière en vrac (9, 21, 22) et avec une installation de réception de matière en vrac (10, 23), et une installation de mesure (7) disposée entre l'installation de dépose (9, 21, 22) et l'installation de réception (10, 23) et destinée à déterminer la quantité de matière en vrac transportée, qui contient un convoyeur intermédiaire (11) qui reçoit au moins une partie de la matière en vrac transportée par le dispositif de transport (1) et l'amène à l'installation de réception (10, 23), **caractérisé en ce que** le convoyeur intermédiaire (11) est équipé pour recevoir la matière en vrac déposée par l'installation de dépose (9, 21, 22) et **en ce que** l'installation de mesure (7) présente en outre une roue doseuse (17) disposée entre le convoyeur intermédiaire (11) et l'installation de réception (10, 23), qui peut être mise en rotation par la matière en vrac déposée par le convoyeur intermédiaire (11) à une vitesse de rotation proportionnelle à la quantité de matière en vrac transportée.

2. Dispositif selon la revendication 1, **caractérisé en ce que** l'installation de mesure (7, 7a, 7b) présente un trajet ascendant (14) disposé entre le convoyeur intermédiaire (11) et l'installation de réception (10, 23) pour la matière en vrac.

3. Dispositif selon la revendication 1 ou 2, **caractérisé en ce que** l'installation de mesure (7, 7a, 7b) est disposée dans un contenant (12) prévu en dessous de l'installation de dépose (9,21,22).

4. Dispositif selon la revendication 3, **caractérisé en ce que** le trajet ascendant (14) est formé par une partie de fond du contenant (12) disposée à l'oblique.

5. Dispositif selon l'une des revendications 1 à 4, **caractérisé en ce que** la roue doseuse (17) est équipée pour produire des impulsions électriques.

6. Dispositif selon l'une des revendications 1 à 5, **caractérisé en ce que** le convoyeur intermédiaire (11) est conçu comme un convoyeur à vis sans fin.

7. Dispositif selon l'une des revendications 1 à 6, **caractérisé en ce que** le transfert de la matière en vrac (4) de l'installation de dépose (9, 21, 22) à l'installation de mesure (7, 7a, 7b) s'effectue par gravité.

8. Dispositif selon l'une des revendications 1 à 7, **caractérisé en ce que** le dispositif de transport (1) comprend une piste de transport (2) conçue pour le transport de la matière en vrac (4), qui présente une ouverture (9) formant l'installation de dépose et menant à l'installation de mesure (7), à travers laquelle une partie au moins de la matière en vrac (4) transportée par le dispositif de transport (1) peut être évacuée dans l'installation de mesure (7) et, en un point situé en aval de celle-ci, une autre ouverture (10) formant l'installation de réception pour ramener dans la piste de transport (2) la partie de la matière en vrac évacuée dans l'installation de mesure (7).

9. Dispositif selon la revendication 8, **caractérisé en ce que** le dispositif de transport (1) est conçu comme un convoyeur continu fonctionnant en continu.

10. Dispositif selon l'une des revendications 1 à 7, **caractérisé en ce que** l'installation de dépose présente un réservoir (21, 22) pour la matière en vrac.

11. Dispositif selon l'une des revendications 1 à 10, **caractérisé en ce qu'**il est relié à au moins un dispositif de dosage (5) présentant une unité d'extraction (6) et l'unité d'extraction (6) est asservie à l'installation de mesure (7, 7a, 7b).

12. Dispositif selon la revendication 11, **caractérisé en ce que** le dispositif de dosage (5) est un organe de dosage entraîné par la roue doseuse (17).

13. Dispositif selon la revendication 11 ou 12, **caractérisé en ce que** le dispositif de dosage (5) présente un circuit électrique destiné à la commande de l'unité d'extraction (6), qui traite les impulsions électriques émises par la roue doseuse (17).

14. Dispositif selon l'une des revendications 1 à 13, **caractérisé en ce que** le dispositif de réception est conformé comme un dispositif de transport (2b, 23).

15. Installation de dosage avec une unité d'extraction (6) pour l'apport dosé d'additifs dans un flux de matière en vrac produit au moyen d'un dispositif de transport (1), dans laquelle l'unité d'extraction (6) est asservie à un dispositif de mesure (7, 7a, 7b) mesurant le débit de transport du dispositif de transport (1), **caractérisée en ce que** l'installation de mesure (7, 7a, 7b) est conformée selon l'une des revendications 1 à 14 et contient un organe de dosage entraîné par la roue doseuse (17).

16. Installation de mélange pour de la matière en vrac (4) avec au moins deux dispositifs de transport menant à une installation de réception (23, 25) commune pour amener des matières en vrac différentes, dans laquelle chaque dispositif de transport est conformé selon l'une au moins des revendications 1 à 14.
